# EUROPÄISCHE PATENTANMELDUNG

(11) **EP 4 278 889 A1**
(43) Veröffentlichungstag der Anmeldung: **22.11.2023**
(21) Anmeldenummer: 23158201.6
(22) Anmeldetag: 23.02.2023
(51) Int. Cl.: A01G 13/02, A01G 9/24

(54) **ÜBERDACHUNGSANORDNUNG ZUM ANBAU VON PFLANZEN UND VERFAHREN ZUM ANBAU VON PFLANZEN UNTER VERWENDUNG EINER SOLCHEN ANORDNUNG**

(30) Priorität: 20.05.2022 DE 102022112791
(71) Anmelder: HPF GmbH, 09130 Chemnitz (DE)
(72) Erfinder: Roppelt, Helmut, 76139 Chemnitz (DE)
(74) Vertreter: Kesselhut, Wolf

(57) **Zusammenfassung**

Eine Anordnung (1) zum Anbau von Pflanzen (100), umfassend eine Tragkonstruktion (2), wenigstens eine auf dieser angeordnete geneigte geschlossene Dachfläche (40), eine unterhalb der Dachfläche (40) angeordnete Sammelrinne (14) zum Sammeln und Ableiten von auf die Dachfläche (40) auftreffendem Regenwasser, sowie einen bodenseitigen Behälter (20), in den das in der Sammelrinne (14) gesammelte Regenwasser einleitbar ist, um dieses im bodenseitigen Behälter (20) zu sammeln und bei Bedarf auf unterhalb der Dachfläche (40) anbaubare Pflanzen (100) auszubringen, zeichnet sich dadurch aus, dass die Sammelrinne (14) mit dem bodenseitigen Behälter (20) über eine Regenwasserablaufleitung 30 und ein in dieser angeordnetes elektrisch betätigbares Ventil (32) wahlweise strömungsmäßig mit dem bodenseitigen Behälter (20) oder einer Schmutzwasserablaufleitung (34) verbindbar ist, dass die Anordnung (1) weiterhin eine elektronische Steuerungseinrichtung (36) zur Betätigung des Ventils (32) sowie wenigstens einen mit dieser verbundenen Regenwasser-Schadstoffsensor (50) umfasst, der stromaufwärts des Ventils (32) in der Regenwasserablaufleitung (30) oder der Sammelrinne (14) angeordnet ist, wobei die Steuerungseinrichtung (36) dazu eingerichtet ist, das elektrisch betätigbare Ventil (32) aus einer ersten Schaltstellung, in der die Regenwasserablaufleitung (30) ausschließlich mit der Schmutzwasserablaufleitung (34) kommuniziert, um verunreinigtes Regenwasser in die Schmutzwasserablaufleitung (34) einzuleiten, in eine zweite Schaltstellung umzuschalten, in der die Regenwasserablaufleitung (30) strömungsmäßig mit dem bodenseitigen Behälter (20) kommuniziert, wenn die vom Regenwasser-Schadstoffsensor (50) erfasste Schadstoffkonzentration einen vorgegebenen Schadstoff-Schwellenwert unterschreitet. Die Erfindung umfasst weiterhin ein Verfahren zum Anbau von Pflanzen unter Verwendung einer solchen Anordnung (1).

## Beschreibung

Die Erfindung betrifft eine Anordnung zum Anbau von Pflanzen und ein Verfahren zum Anbau von Pflanzen unter Verwendung einer solchen Anordnung gemäß dem Oberbegriff von Anspruch 1 und 10.

Mit steigendem Bedarf an regenerativer Energie ergibt sich das Problem, dass die Nutzung der nur begrenzt verfügbaren Flächen zur Energiegewinnung mit der Nutzung zur Nahrungsmittelproduktion konkurriert. Um die verfügbaren landwirtschaftlichen Flächen effizienter zu nutzen, werden sogenannte Agri-Photovoltaik-Anlagen vorgeschlagen, die die landwirtschaftliche Nutzung und die Energiegewinnung mittels PV-Anlagen miteinander kombinieren, um die Flächennutzungsrate zu steigern. Wie in diesem Zusammenhang erkannt wurde, kann eine teilweise Abschattung der Pflanzen durch die oberhalb von diesen angeordneten PV Module, die Teil einer zusammenhängenden geschlossenen Dachfläche sind, oder diese sogar vollständig bilden, den Ertrag bei einigen Pflanzensorten sogar erhöhen, wenn durch die Abschattung die Bedingungen für das Pflanzenwachstum beispielsweise aufgrund geringerer Temperaturen und einer gleichmäßigeren Versorgung mit Wasser verbessert werden. Somit übertrifft der Nutzen der kombiniert genutzten Fläche den Nutzen zweier einzelner Flächen, die zum einen ausschließlich für die Stromerzeugung mittels PV-Modulen und zum anderen ausschließlich zum Anbau der Pflanzen genutzt werden.

Weiterhin steigt der Anteil an elektrisch betriebenen Geräten und Fahrzeugen stetig an, sodass auch bei der Bewirtschaftung von landwirtschaftlich genutzten Flächen die Versorgung mit elektrischem Strom eine zunehmend wichtigere Rolle einnimmt.

Aus der nicht vorveröffentlichten DE 10 2022 100 821 A1 ist eine Anordnung zum kombinierten Anbau von Pflanzen und zur gleichzeitigen photovoltaischen Erzeugung von elektrischer Energie bekannt, welche eine Tragkonstruktion aus entlang von Reihen angeordneten Vertikalrahmen aus Metallprofilen umfasst, an denen jeweils in einem Winkel V-förmig verlaufende Ausleger aufgenommen sind, die Solarmodule tragen, welche eine geschlossene, im Querschnitt V-förmige Dachfläche aufspannen. Um das auf die Dachfläche auftreffende Regenwasser zu sammeln und dieses für eine gezielte Bewässerung der unter der Dachfläche angebauten Pflanzen nutzen zu können, umfasst die Tragkonstruktion eine Sammelrinne, in der das Regenwasser zentral gesammelt und über eine Regenwasserablaufleitung in einen bodenseitigen Behälter eingeleitet wird, aus welchem dieses bei Bedarf gezielt zur Bewässerung der Pflanzen entnommen werden kann.

Eines der Probleme beim Anbau von Pflanzen unter geschlossenen Dachflächen, unabhängig davon, ob diese durch PV Module, transparente Elemente wie Glasscheiben oder Kunststofffolien oder auch eine Kombination davon aufgespannt werden, besteht darin, dass die Pflanzen nicht mit Regenwasser bewässert werden sollten, welches mit Schadstoffen wie saurem Regen, biologischen Verunreinigungen oder gar radioaktiven oder chemischen Substanzen belastet ist, da diese Schadstoffe in der Regel von den Pflanzen aufgenommen werden und durch deren Verzehr in die menschliche/tierische Nahrungskette gelangen.

Demgemäß ist es eine Aufgabe der vorliegenden Erfindung, eine Anordnung zu schaffen, welche einen Anbau von Pflanzen unter optimierten Wachstumsbedingungen in Verbindung mit einer Ressourcen schonenden Bewässerung derselben mit aufgefangenem Regenwasser erlaubt, bei der die Menge an durch die Pflanzen aus dem Regenwasser aufgenommenen Schadstoffen verringert ist.

Diese Aufgabe wird erfindungsgemäß durch eine Anordnung mit den Merkmalen von Anspruch 1 gelöst.

Eine weitere Aufgabe der Erfindung ist es, ein Verfahren zum Anbau von Pflanzen unter optimierten Wachstumsbedingungen unter Verwendung einer solchen Anordnung zu schaffen, mit welchem sich die Menge an durch die Pflanzen aufgenommenen Schadstoffen bei einer Bewässerung derselben mit aufgefangenem Regenwasser verringern lässt.

Diese Aufgabe wird erfindungsgemäß durch ein Verfahren mit den Merkmalen von Anspruch 10 gelöst.

Weitere Merkmale der Erfindung sind in den Unteransprüchen enthalten.

Gemäß der Erfindung umfasst eine Anordnung zum Anbau von Pflanzen eine Tragkonstruktion, wenigstens eine auf dieser angeordnete geschlossene und gegenüber der Horizontalen geneigte Dachfläche sowie eine unterhalb der Dachfläche, z.B. entlang von einem unteren Rand derselben, angeordnete Sammelrinne zum Sammeln und Ableiten von auf die Dachfläche auftreffendem Regenwasser. Die Anordnung umfasst weiterhin einen bodenseitigen Behälter, der bevorzugt unter der Dachfläche innerhalb der Tragkonstruktion angeordnet ist, in den das in der Sammelrinne zentral aufgefangene Regenwasser einleitbar ist, um dieses im bodenseitigen Behälter zu sammeln und bei Bedarf mittels einer geeigneten Pumpe und Sprüheinrichtung auf Pflanzen auszubringen, die unterhalb der Dachfläche geschützt unter für deren Wachstum optimierten Bedingungen angebaut werden.

Die Erfindung zeichnet sich dadurch aus, dass die Sammelrinne mit dem bodenseitigen Behälter über eine Regenwasserablaufleitung und ein in dieser angeordnetes elektrisch betätigbares Ventil wahlweise strömungsmäßig mit dem bodenseitigen Behälter oder einer Schmutzwasserablaufleitung verbindbar ist, und dass die Anordnung weiterhin eine elektronische Steuerungseinrichtung zur Betätigung des Ventils sowie wenigsten einen mit dieser verbundenen Regenwasser-Schadstoffsensor umfasst, der stromaufwärts des Ventils in der Regenwasserablaufleitung oder/oder der Sammelrinne angeordnet ist. Die Steuerungseinrichtung, die bevorzugt durch einen Mikrocontroller realisiert wird, ist dazu eingerichtet, das elektrisch betätigbare Ventil aus einer ersten Schaltstellung, in der die Regenwasserablaufleitung ausschließlich mit der Schmutzwasserablaufleitung kommuniziert, um verunreinigtes Regenwasser in die Schmutzwasserablaufleitung einzuleiten, in eine zweite Schaltstellung umzuschalten, in der die Regenwasserablaufleitung strömungsmäßig mit dem bodenseitigen Behälter kommuniziert, wenn die vom Regenwasser-Schadstoffsensor erfasste Schadstoffkonzentration einen vorgegebenen Schadstoff-Schwellenwert unterschreitet.

Hierzu ist die elektronische Steuerungseinrichtung bevorzugt als eine Mikrocontroller-Schaltung realisiert, die durch eine zugehörige Software die vom Schadstoffsensor übersandten Messwerte, die ein Maß für Schadstoffkonzentration eines oder mehrerer Schadstoffe im Regenwasser sind, fortlaufend erfasst und mit einem vorgegebenen Schwellenwert vergleicht, welcher zuvor bevorzugt empirisch ermittelt wird und als bevorzugt veränderbarer Wert in einem zugehörigen elektronischem Speicher der elektronischen Steuerungseinrichtung abgelegt ist. Hierbei soll von der Erfindung mit umfasst sein, dass der Schwellenwert gleichzeitig sowohl einen unteren Schwellenwert, als auch einen oberen Wert enthalten kann, insbesondere dann, wenn der PH-Wert des Regenwassers erfasst, und das Ventil in Abhängigkeit von diesem geschaltet wird. So kann beispielsweise bei einem erfassten PH-Wert unterhalb von 5,0, bevorzugt jedoch unterhalb von 6,5 eine Umschaltung des Ventils in die erste Schaltstellung erfolgen, da sich im sauren Milieu z.B. die Löslichkeit von Al₃ - und Mn₂ -Ionen in der Weise ändert, dass diese toxisch auf die Pflanzen wirkenden Ionen verstärkt von den Pflanzen aufgenommen werden. Ebenso ist das Wachstum der Pflanzen bei einem PH-Wert oberhalb von 7,5 beeinträchtigt, so dass das Ventil auch in diesem Falle durch die elektronische Steuerungseinrichtung automatisch in die erste Schaltstellung verfahren wird, in der das Regenwasser ausschließlich in die Abwasserleitung eingeleitet wird.

Bevorzugt wird das Ventil bei einem PH-Wert zwischen 6,5 und 7,5 in die zweite Schaltstellung verfahren, so dass das auf der Dachfläche aufgefangene Regenwasser in den bodenseitigen Behälter eingeleitet wird.

Gemäß einer ersten Ausfuhrungsform der Erfindung ist das elektrisch betätigbare Ventil ein 3-Wegeventil, welches bevorzugt wenigstens in die erste und zweite Schaltstellung schaltbar ist, und welches einen mit der Regenwasserablaufleitung verbundenen Einlass, einen mit der Schmutzwasserablaufleitung verbundenen ersten Schmutzwasserauslass sowie einen mit dem bodenseitigen Behälter über eine Reinwasserzuleitung verbundenen zweiten Reinwasserauslass besitzt. Dies erlaubt es, dass das Ventil im einfachsten Fall lediglich zwischen der ersten und zweiten Schaltstellung umgeschaltet wird, wobei die erste Schaltstellung die Grund-Schaltstellung ist, in welche das Ventil beispielsweise bei einem Stromausfall automatisch verfährt, um sicher zu stellen, dass kein verunreinigtes Wasser in den bodenseitigen Behälter eingeleitet wird, welches z.B. im Falle von radioaktiven Substanzen, mitunter dessen gesamten Inhalt an Reinwasser kontaminieren kann.

Zur Messung der Belastung des über die Dachfläche aufgefangenen Regenwassers mit radioaktiven Substanzen kann der wenigstens eine Sensor zwei oder mehr Sensoren umfassen, von denen der eine beispielsweise ein pH-Wert -Sensor, und der andere ein bekanntes Geiger-Müller Zählrohr umfasst, welches die Rate an radioaktiven Zerfällen im Bereich der Regenwasserablaufleitung erfasst. Hierbei ist das Zählrohr bevorzugt innerhalb der Regenwasserablaufleitung angeordnet, um die Anwesenheit von Alphastrahlem und/oder Betastrahlern im Regenwasser mit einer erhöhten Genauigkeit zu erfassen, die durch die Wandung der bevorzugt aus Metall bestehenden Regenwasserablaufleitung zumindest zum Teil abgeschirmt werden.

Nach einem weiteren Gedanken der Erfindung kann der gleichzeitig oder alternativ zum PH-Wert-Sensor sowie zum Radioaktivitätssensor eingesetzte Schadstoffsensor ein bekannter Sensor zum Erfassen der elektrischen Leitfähigkeit sein, welche ein Maß für die Konzentration der im Regenwasser gelösten Ionen ist. So kann ein zu hoher Leitwert z.B. darauf hinweisen, dass die Menge an im Regenwasser gelöstem Schwefeldioxid oder auch Stickoxiden den für ein optimales Pflanzenwachstum bevorzugten Schwellenwert übersteigt, so dass das Ventil auch in diesem Falle in die erste Schaltstellung verfahren wird.

Bei einer weiteren Ausführungsform der Erfindung ist das elektrisch betätigbare Ventil ein 3/3-Wegeventil, das einen mit der Regenwasserablaufleitung verbundenen Einlass, einen mit der Schmutzwasserablaufleitung verbundenen ersten Schmutzwasserauslass sowie einen mit dem bodenseitigen Behälter über eine Reinwasserzuleitung verbundenen zweiten Reinwasserauslass besitzt, und das durch die elektronische Steuerungseinrichtung in eine dritte Sperrstellung geschaltet werden kann, in der der mit der Regenwasserablaufleitung verbundene Einlass vollständig geschlossen ist. Dies ermöglicht es, Regenwasser nach einer längeren Trockenphase in der bevorzugt vertikal verlaufenden Regenwasserablaufleitung zu sammeln und dieses dann durch Umschalten des Ventils in die erste Schaltstellung als Wasserschwall durch das Ventil sowie auch die Regenwasserablaufleitung hindurch zu leiten, um Verunreinigungen wie Staub und sonstige Partikel, die sich im Laufe der Zeit in der teilweise abgetrockneten Regenwasserablaufleitung, sowie auch der Sammelrinne angesammelt haben, auszuwaschen.

Das Ventil kann hierzu z.B. als ein bekanntes Kugelventil mit einem Eingang und zwei Ausgängen ausgestaltet sein, dessen mit entsprechenden Verbindungsbohrungen versehener Ventilkörper durch einen Elektromotor und alternativ bevorzugt auch von Hand, in die zuvor genannten drei Schaltstellungen verdrehbar ist, von denen der Eingang in der dritten Schaltstellung durch einen geschlossenen Außenabschnitt des kugelförmigen oder zylinderförmigen Ventilkörpers verschlossen wird, der mit entsprechenden kommunizierenden Bohrungen versehenen. Derartige 3/3-Wege Umschaltventile sind z.B. aus dem Heizungsbau in verschiedensten Ausgestaltungen bekannt.

Um auch nach einer längeren Trockenphase ein vollständiges Austrocknen der Regenwasserablaufleitung zu verhindern, und dadurch eine Beeinträchtigung des Messverhaltens oder der Empfindlichkeit des Sensors zu vermeiden, kann die Regenwasserablaufleitung einen U-förmigen Umlenkabschnitt für das darin zum Ventil hin abgeleitete Regenwasser besitzen, in welchem der wenigstens eine Regenwasser-Schadstoffsensor angeordnet ist. Hierdurch ergibt sich der Vorteil, dass der Sensor in der Regel ständig mit Wasser benetzt ist, so dass es auch nach längeren Trockenphasen und plötzlich einsetzendem Regen nicht zu Fehlmessungen kommt, wenn der trockene Sensor plötzlich wieder mit einer großen Menge Wasser beaufschlagt wird.

Nach einem weiteren der Erfindung zugrunde liegenden Gedanken kann es ferner vorgesehen sein, dass die Regenwasserablaufleitung einen zusätzlichen, mit der elektronischen Steuerungseinrichtung verbundenen Füllstandsensor enthält, und dass die elektronische Steuerungseinrichtung dazu eingerichtet ist, das 3/3-Wege Ventil aus der dritten Sperrstellung in die erste Schaltstellung zu schalten, in der die Regenwasserablaufleitung ausschließlich mit der Schmutzwasserablaufleitung kommuniziert wenn der vom Füllstandsensor erfasste Füllstand oberhalb von einem vorgegebenen Füllstandschwellenwert liegt.

Bei dieser Ausführungsform kann es weiterhin vorgesehen sein, dass die elektronische Steuerungseinrichtung dazu eingerichtet ist, das 3/3-Wege Ventil im Anschluss daran nach einer bevorzugt einstellbaren Zeitdauer, z.B. nach 5 min, aus der ersten Schaltstellung wieder in die dritte Schaltstellung zurück zu schalten, wenn die vom Regenwasser-Schadstoffsensor erfasste Schadstoffkonzentration den vorgegebenen Schadstoff-Schwellenwert überschreitet, und das Ventil im Anschluss daran in Abhängigkeit von den Signalen des Füllstandsensors beim Erreichen des maximalen Füllstands abermals in die erste Schaltstellung zu schalten, um eine erneute Schwallspülung durchzuführen. Diese Schaltreihenfolge des Ventils zwischen der ersten und dritten Schaltstellung in Abhängigkeit von den Signalen des Füllstandsensors wird bevorzugt solange wiederholt, bis die vom Regenwasser-Schadstoffsensor ermittelten Werte für die Schadstoffkonzentration den vorgegebenen Schadstoff-Schwellenwert unterschreiten. Durch diese wiederholte Schwallspülung ergibt sich der Vorteil, dass auch dann, wenn die vom Regenwasser-Schadstoffsensor ermittelten Werte für die Schadstoffkonzentration unterhalb des vorgegebenen Schwellenwerts liegen, sichergestellt werden kann, dass die gesamte Innenfläche der Regenwasserablaufleitung stets vollständig mit Regenwasser gespült wird, ohne dass die Gefahr besteht, dass sich Schadstoffe aus dem Regenwasser an denjenigen Stellen der Regenwasserablaufleitung verstärkt anlagern, an denen das Wasser bei lediglich schwachem Regen an der Innenwand als Rinnsal herabläuft.

Gemäß einer weiteren Ausführungsform der Erfindung umfasst die Anordnung eine erste und zweite Tragkonstruktion, auf der eine Vielzahl von Solarmodulen entlang von Reihen aufnehmbar sind, wobei jede der Tragkonstruktionen wenigstens zwei parallel in einem der Breite eines Solarmoduls entsprechenden Abstand in Längsrichtung der Reihen von Solarmodulen zueinander angeordnete Vertikalrahmen umfasst, die jeweils zwei vertikale Pfosten und zwei an diesen aufgenommene und in einem Winkel V-förmig zueinander angeordnete Ausleger aufweisen, auf denen die Solarmodule mit ihren Kanten aufgenommen sind. Die Ausleger sind jeweils mittels eines zentralen Verbindungselements miteinander verbunden; und jede der Tragkonstruktionen umfasst eine eigene Sammelrinne zum Sammeln und Ableiten von auf die Solarmodule auftreffendem Regenwasser, die zentral unterhalb der geschlossenen Dachfläche verläuft, die von den Oberseiten der Solarmodule, bzw. von zwischen diesen optional eingesetzten Abdeckelementen aufgespannt wird.

Zwischen den vertikalen Pfosten zweier benachbarter Vertikalrahmen ist erfindungsgemäß bevorzugt jeweils mindestens ein bodenseitiger Behälter angeordnet, in dem das in der Sammelrinne gesammelte Regenwasser aufnehmbar ist, wobei die Ausleger der ersten Anordnung und die Ausleger der zweiten, parallel hierzu verlaufenden Anordnung auf den einander zugewandten Seiten der ersten und zweiten Anordnung einander gegenüberliegend auf der gleichen Höhe angeordnet, und jeweils über ein nach unten hin geöffnetes bogenförmiges oder V-förmiges Giebelprofil mechanisch miteinander verbunden sind. Die Giebelprofile sind dazu eingerichtet, weitere Solarmodule zu tragen, die bevorzugt jeweils an zwei benachbarten Giebelprofilen paarweise aufgenommen sind. Diese können insbesondere einzeln oder in Gruppen verschwenkbar gelagert sein, um den darunter liegenden Raum, in welchem sich die Pflanzen befinden, zu belüften, bzw. Sonnenlicht direkt in diesen Raum einzustrahlen.

Hierbei ist die Außenseite zweier oder mehrerer der bogenförmigen Giebelprofile in den Bereichen, in denen keine Solarmodule angeordnet sind, vorzugsweise mit den zuvor erwähnten Abdeckelementen, z.B. einer Kunststofffolie, oder einer Glasfläche, belegt, derart, dass die Solarmodule mit den Abdeckelementen die geschlossene, flüssigkeitsdichte Dachfläche bilden, unterhalb von welcher die Nutzpflanzen angebaut werden.

Nach einem weiteren der Erfindung zugrunde liegenden Gedanken kann die gesamte geschlossene Dachfläche mit einer bekannten Lotus - Effekt - Beschichtung beaufschlagt sein, welche das Abspülen von Schadstoffen nach einer längeren Trockenphase durch einsetzenden Regen verbessert. Hierdurch wird bei einem aktiven Einsatz der erfindungsgemäßen Anordnung sowie des nachfolgend noch näher beschriebenen erfindungsgemäßen Verfahrens die Konzentration von Schadstoffen im aufgefangenen Regenwasser im bodenseitigen Behälter noch einmal erheblich reduziert.

Die erfindungsgemäße Anordnung besitzt den Vorteil, dass eine Steigerung der Flächennutzung ermöglicht wird, indem neben der Lichtenergie, die die Solarmodule in elektrische Energie umwandeln, unterhalb der Solarmodule die Nutzpflanzen angebaut werden können, deren Wachstum aufgrund des variabel veränderlichen Lichteinfalls im Vergleich zu einem Anbau der Pflanzen auf einer freien Ackerfläche, in der Regel optimiert ist.

Wie von der Anmelderin erkannt wurde, eignet sich die erfindungsgemäße Anordnung im besonderen Maße für den Anbau von Beeren, insbesondere von Aroniabeeren, da diese im Gegensatz zu Weizen weniger Sonnenlicht benötigen. Ein weiterer Vorteil der erfindungsgemäßen Anordnung ist darin zu sehen, dass der Bewässerungsbedarf der Pflanzen insgesamt sinkt, da durch die Abschattung unter den PV-Modulen weniger Wasser durch direkte Sonneneinstrahlung verdunstet, und die Pflanzen auch gleichzeitig vor Wetterbedingungen wie Starkregen oder Hagel und auch Starkwind geschützt werden. Durch den bodenseitigen Behälter, in dem das Regenwasser ohne den Einsatz von zusätzlichen Pumpen gesammelt werden kann, kann zudem eine kontrollierte Bewässerung zu optimierten Zeiten erfolgen, z.B. am Morgen vor Sonnenaufgang, um die durch Verdunstung verlorene Menge an Regenwasser so weit wie möglich zu verringern.

Die Bereitstellung eines kostengünstigen Speichers für das abgeleitete Regenwasser eröffnet ferner die Möglichkeit, den Ertrag an Pflanzen dadurch zu erhöhen, dass Regenwasser, welches sonst z.B. in Regenperioden ungenutzt im Boden versickert, aufgefangen und beispielsweise in anschließenden Trockenperioden gezielt zur dosierten Bewässerung der Pflanzen verwendet werden kann. Hierbei kann durch den Einsatz der erfindungsgemäßen Anordnung dafür Sorge getragen werden, dass die Konzentration an Schadstoffen im aufgefangenen Wasser, welches zur Bewässerung der Pflanzen eingesetzt wird, so gering wie möglich gehalten werden kann, da der nach einer längeren Trockenphase einsetzende Regen durch eine entsprechende Schaltung des elektronisch beätigibaren Ventils bevorzugt zunächst einmal dazu verwendet wird, die im Laufe der Trockenphase angesammelten Schadstoffe von der Dachfläche zu spülen, welche dann ausnahmslos in die Abwasserleitung eingeleitet werden (Schaltstellung 1 des Ventils). Erst wenn die Schadstoffkonzentration unterhalb des bevorzugt empirisch ermittelten, und auch einstellbaren Schadstoff-Schwellenwert für den betreffenden Schadstoff gesunken ist, was vom Schadstoff-Sensor, bzw. den Schadstoffsensoren und die mit diesem verbundene elektronische Steuerungseinrichtung bevorzugt fortlaufend erfasst wird, wird das elektrisch betätigbare Ventil aus der ersten Schaltstellung in die zweite Schaltstellung umgeschaltet und die Schadstoffkonzentration durch den Regenwasser-Schadstoffsensor fortlaufend überwacht und der ermittelte Wert für die Schadstoffkonzentration mit dem vorgegebenen Schadstoff-Schwellenwert verglichen.

Erst wenn die ermittelten Werte für die Schadstoffkonzentration wieder ansteigen und oberhalb des Schadstoff-Schwellenwerts liegen, wird das Ventil in die erste Schaltstellung umgeschaltet, so dass das mit Schadstoffen belastete Regenwasser in die Schmutzwasserablaufleitung eingeleitet wird. Obgleich die Umschaltung auch über einen Füllstandssensor im bodenseitigen Behälter selbst gesteuert werden kann, ist es bevorzugt vorgesehen, dass die bodenseitigen Behälter mit einer Überlaufrohr versehen sind, über welches das Wasser automatisch ohne die Betätigung von Ventilen aus dem bodenseitigen Behälter abgeleitet wird, wenn der Maximalpegel in dem oder den bodenseitigen Behältern nach einem Dauerregen überschritten wird.

Nach einem weiteren der Erfindung zugrunde liegenden Gedanken umfasst ein Verfahren zum Anbau von Pflanzen unter Verwendung einer zuvor beschriebenen Anordnung, bei der bevorzugt Pflanzen für die Nahrungs-, bzw. Futtermittelproduktion unterhalb der geneigten geschlossenen Dachfläche angebaut werden, die folgenden Verfahrensschritte:
- Schalten des Ventils in die erste Schaltstellung und Erfassen der Schadstoffkonzentration in dem in der Regenwasserablaufleitung und/oder der Sammelrinne befindlichen Regenwasser bei einsetzendem Regen,
- Belassen des Ventils in der ersten Schaltstellung solange die vom Sensor erfasste Schadstoffkonzentration oberhalb eines vorgegebenen, vorzugsweise einstellbaren Schwellenwerts liegt, so dass Regenwasser aus der Regenwasserablaufleitung ausschließlich in die Schmutzwasserablaufleitung eingeleitet wird,
- Umschalten des Ventils in die zweite Schaltstellung und Einleiten des Regenwassers aus der Sammelrinne in den bodenseitigen Behälter, wenn die vom Sensor erfasste Schadstoffkonzentration unterhalb des vorgegebenen Schwellenwerts liegt, und
- Verschließen des Ventils, wenn die vom Sensor erfasste Schadstoffkonzentration den vorgegebenen Schwellenwert übersteigt, sowie
- Ausbringen des im bodenseitigen Behälter gesammelten Regenwassers auf die Pflanzen.

Das Verfahren besitzt den Vorteil, dass sich dieses auch bei bestehenden Dachflächen nach der Nachrüstung des Ventils und der Steuerungseinrichtung sowie des, bzw. der Sensoren mit vergleichsweise geringen Kosten nachrüsten lässt, um die Qualität des auf die Pflanzen ausgebrachten Regenwassers zu verbessern.

Die Erfindung wird nachfolgend mit Bezug auf die Zeichnungen anhand bevorzugter Ausführungsforrnen beschrieben. In den Zeichnungen zeigen:

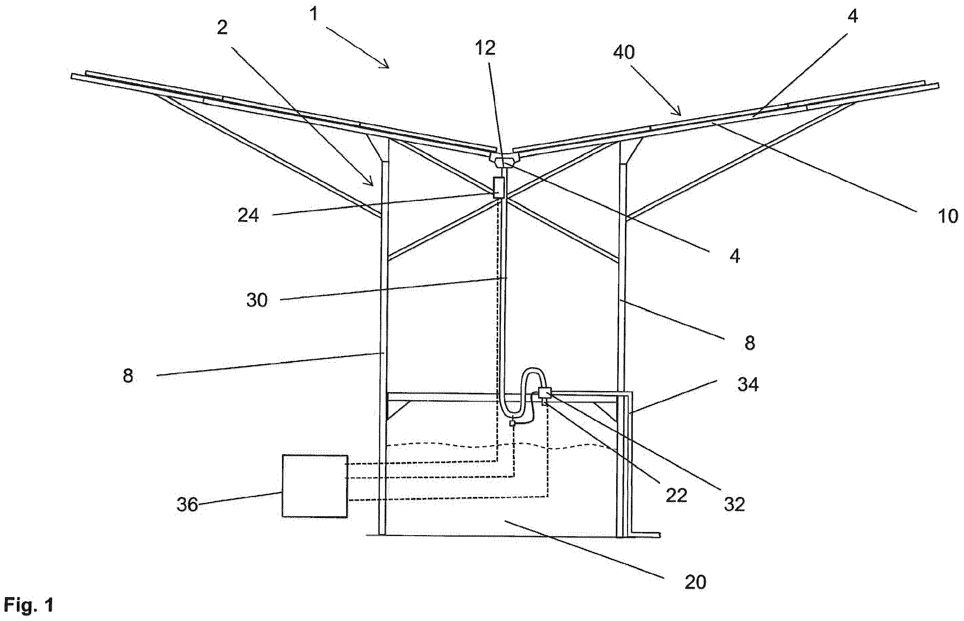

- Fig. 1: eine schematische Schnittdarstellung einer erfindungsgemäßen Anordnung, bei welcher die Tragkonstruktion durch eine Vielzahl von Vertikalrahmen mit seitlichen, V-förmig verlaufenden Auslegern gebildet wird, auf denen Solarmodule angeordnet sind, welche die geschlossene Dachfläche aufspannen,

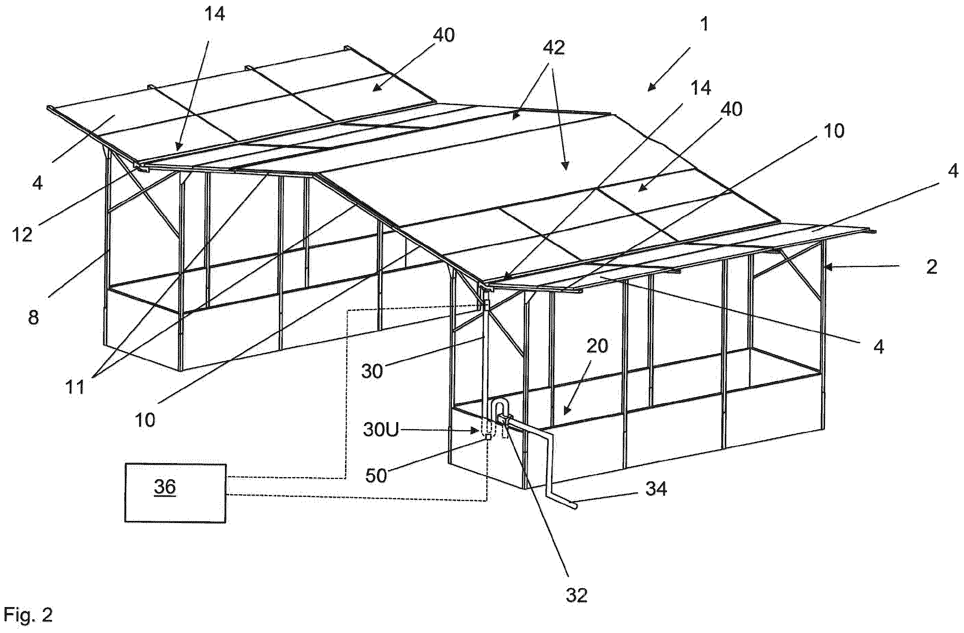

- Fig. 2: eine schematische Darstellung der bevorzugten Ausführungsform der Erfindung, bei der eine erste und eine zweite in Fig. 1 gezeigte Tragkonstruktion aus reihenförmig hintereinander angeordneten Vertikalrahmen, deren Ausleger über nach unten geöffnete Giebelprofile verbunden sind, die Dachfläche aufspannen, und

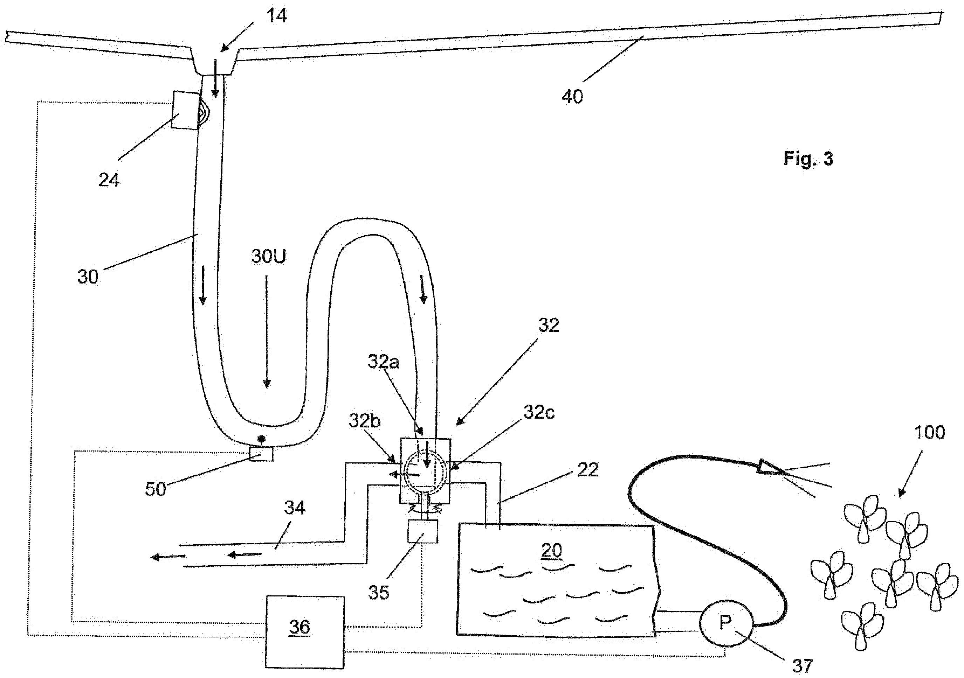

- Fig. 3: eine schematische Darstellung der Regenwasserablaufleitung mit einem in dieser angeordneten U-förmigen Umlenkabschnitt sowie dem elektrisch betätigbaren Ventil sowie der elektronischen Steuerungseinrichtung.

Wie in Figur 1 und 2 gezeigt ist, umfasst eine erfindungsgemäße Anordnung 1 zum Anbau von Pflanzen 100 eine Tragkonstruktion 2, auf der wenigstens eine geneigte geschlossene Dachfläche 40 angeordnet ist, die bevorzugt von Solarmodulen 4 aufgespannt wird. Unterhalb der Dachfläche ist eine Sammelrinne 14 zum Sammeln und Ableiten von auf die Dachfläche 40 auftreffendem Regenwasser angeordnet, welches über eine Regenwasser Ablaufleistung 30 in einen bodenseitigen Behälter 20 eingeleitet wird, um dieses im bodenseitigen Behälter 20 zu sammeln und bei Bedarf auf die unterhalb der Dachfläche 40 angebauten Pflanzen 100 auszubringen. In der Regenwasserablaufleistung 30 ist ein elektrisch sowie bevorzugt auch manuell umschaltbares Ventil 32 angeordnet, über welches die Regenwasserablaufleistung 30 wahlweise strömungsmäßig mit dem bodenseitigen Behälter 20 oder einer Schmutzwasserablaufleitung 34 verbunden werden kann, über die verunreinigtes Wasser von der Dachfläche 40 zur weiteren Aufbereitung, beispielsweise einer Kläranlage zugeleitet wird.

Wie in der Darstellung von Figur 3 weiterhin im Detail gezeigt ist, umfasst die erfindungsgemäße Anordnung 1 eine elektronische Steuerungseinrichtung 36 zur Betätigung des Ventils 32 sowie wenigstens einen mit dieser über eine nicht näher bezeichnete elektrische Leitung verbundenen Regenwasser-Schadstoffsensor 50. Dieser ist bevorzugt stromaufwärts des Ventils 32 in der Regenwasserablaufleitung 30 angeordnet; kann gemäß einer weiteren, nicht gezeigten Ausführungsform der Erfindung jedoch alternativ oder zusätzlich ebenfalls auch in der Sammelrinne 14, beispielsweise in deren Boden im Bereich des Ablaufs positioniert sein, über welchen die Regenwasserablaufleistung 30 mit der Sammelrinne 14 verbunden ist.

Gemäß der Erfindung ist die bevorzugt als Microkontrollerschaltung ausgeführte elektronische Steuerungseinrichtung 36 durch eine entsprechende Steuerungssoftware dazu eingerichtet, das elektrisch betätigbare Ventil 32 aus einer ersten Schaltstellung, in der die Regenwasserablaufleitung 30 ausschließlich mit der Schmutzwasserablaufleitung 34 kommuniziert, um verunreinigtes Regenwasser in die Schmutzwasserablaufleitung 34 einzuleiten, in eine zweite Schaltstellung umzuschalten, in der das nicht oder nur geringe mit Schadstoffen verunreinigte Regenwasser in den bodenseitigen Behälter 20 eingeleitet wird, wenn die vom Regenwasser-Schadstoffsensor 50 erfasste Schadstoffkonzentration einen vorgegebenen Schadstoff-Schwellenwert unterschreitet.

Das Unterschreiten der Schadstoffkonzentration soll im Falle einer Bestimmung des pH-Werts mit einschließen, dass auch solche pH-Werte zum Umschalten des Ventils in die erste Schaltstellung führen, wenn der pH-Wert des Regenwassers z.B. durch im Regenwasser gelöste Säuren zu niedrig ist, und z.B. einen PH-Wert von 6,5 unterschreitet. Bevorzugt wird das Ventil 32 bei einem pH-Wert zwischen 6,5 und 7,5 in die zweite Schaltstellung verfahren, so dass das auf der Dachfläche 40 aufgefangene Regenwasser in diesem Falle in den bodenseitigen Behälter 20 eingeleitet wird.

Das elektrisch betätigbare Ventil 32, welches in Figur 3 exemplarisch als ein 3/2-Wege oder 3/3-Wegeventil Kugelventil dargestellt ist, besitzt einen mit der Regenwasserablaufleitung 30 verbundenen Einlass 32a, einen mit der Schmutzwasserablaufleitung 34 verbundenen ersten Schmutzwasserauslass 32b sowie einen mit dem bodenseitigen Behälter 20 über eine Reinwasserzuleitung 22 verbundenen zweiten Reinwasserauslass 32c. In der in Figur 3 gezeigten ersten Schaltstellung des Ventils 32 ist dessen Einlass 32a über die im nicht näher bezeichneten kugelförmigen Ventilkörper geformten gestrichelt angedeuteten Kanäle mit der Schmutzwasserablaufleistung 34 verbunden, sodass das über die Regenwasserablaufleistung 30 zugeführte Regenwasser nicht in den bodenseitigen Behälter 20 eingeleitet wird.

Um das Regenwasser von der geschlossenen Dachfläche 40 bei einer hinreichend geringen, vom Sensor 50 erfassten Schadstoffkonzentration in den bodenseitigen Behälter 20 einzuleiten, wird der Ventilkörper durch einen mit der elektronischen Steuerungseinrichtung 36 verbundenen Stellmotor 35 in die nicht näher gezeigte zweite Schaltstellung rotiert, in der der Einlass 32a strömungsmäßig mit dem zweiten Reinwasserauslass 32c verbunden ist, sodass das Wasser von der Regenwasserablaufleistung 30 unmittelbar in die Regenwasserzuleitung 22 und über diese in den bodenseitigen Behälter 20 eingeleitet wird. Aus diesem kann das mit keinen oder nur einer geringen Schadstoffkonzentration belastete Regenwasser dann bei Bedarf mittels einer Pumpe 37 entnommen und auf die Pflanzen 100 gesprüht werden.

Bei der bevorzugten Ausführungsform der Erfindung ist das elektrisch betätigbare Ventil 32 ein 3/3-Wege Ventil, das durch die elektronische Steuerungseinrichtung 36 in eine dritte, in Fig. 3 nicht gezeigte Sperrstellung schaltbar ist, in der der mit der Regenwasserablaufleitung 30 verbundene Einlass 32a durch den Ventilkörper verschlossen wird. Hierdurch wird es ermöglicht, dass das Regenwasser in der Regenwasserablaufleitung 30 vorübergehend gestaut wird, so dass das Wasser bei Regen in der Regenwasserablaufleitung 30 ansteigt und die Leitung nach dem Öffnen des Ventils 32 mit einem Wasserschwall gespült wird. Dieses Schwall-Spülen kann unabhängig davon, ob ein Füllstandsensor 24 verbaut ist oder nicht, mehrmals nacheinander durchgeführt werden, indem bei einer Änderung der vom Sensor 50 erfassten Schadstoffkonzentration in einem vorgegebenen Zeitintervall, die ein Indikator für einen Abfluss von Regenwasser durch die Regenwasserablaufleitung 30 ist, das Ventil 32 in vorgegebenen Zeitintervallen von z.B. 5 min, zwischen der ersten und dritten Schaltstellung hin- und her geschaltet wird.

In dem Fall, dass der Regenwasser-Schadstoffsensor 50 ein Sensor für radioaktive Strahlung ist, umfasst dieser bevorzugt ein Geiger-Müller-Zählrohr, welches an der Außenseite oder alternativ auch in einem gegenüber dem Regenwasser abgeschotteten Hohlraum im Inneren der Regenwasserablaufleitung 30 angeordnet ist.

Wie weiterhin der Darstellung der Figur 3 entnommen werden kann, umfasst die Regenwasserablaufleitung 30 einen U-förmigen Umlenkabschnitt 30U in welchem der wenigstens eine Regenwasser-Schadstoffsensor 50 angeordnet ist, sodass dieser auch bei längeren Trockenphasen stets mit Feuchtigkeit benetzt ist und die Messwertgeber, beispielsweise die elektrischen Kontakte des Sensors im Falle einer Messung der elektrischen Leitfähigkeit nicht eintrocknen und danach mit einer isolierenden Oxidschicht belegt sind, welche die Messwerte verfälscht.

Wie weiterhin in der Darstellung der Figur 3 gezeigt ist, kann die Regenwasserablaufleitung 30 einen zusätzlichen, mit der elektronischen Steuerungseinrichtung 36 verbundenen Füllstandsensor 24 enthalten, der beispielsweise ein Ultraschallsensor oder ein sonstiger bekannter Sensor zum Messen der Füllhöhe in einem Flüssigkeitsbehälter ist. Bei dieser Ausführungsform ist die elektronische Steuerungseinrichtung 36 dazu eingerichtet, das elektrisch betätigbare Ventil 32 aus der dritten Sperrstellung in die erste Schaltstellung zu schalten, in der die Regenwasserablaufleitung 30 ausschließlich mit der Schmutzwasserablaufleitung 34 kommuniziert, wenn der vom Füllstandsensor 24 erfasste Füllstand in der Regenwasserablaufleitung 30 oberhalb von einem vorgegebenen Füllstandsschwellenwert liegt. Der Füllstandsensor 24 ist bevorzugt am oberen Ende der Regenwasser Ablaufleistung 30 an deren Außenseite befestigt, sodass die gesamte Länge der Regenwasserablaufleistung 30 als temporäres Wasserreservoir dient, welches als Wasserschwall zum Spülen der Regenwasserablaufleistung 30 zur Verfügung steht, wenn das elektrisch betätigbare bin Ventil 32, wie zuvor beschrieben, aus der ersten Schaltstellung in die dritte Sperrstellung und zurück geschaltet wird.

Figur 1 zeigt eine schematische Schnittdarstellung einer bevorzugten Ausführungsform der erfindungsgemäßen Anordnung 1. Die Solarmodule 4 sind in Längsrichtung auf einer Tragkonstruktion 2 entlang von Reihen nebeneinander angeordnet, die aus wenigstens zwei, bevorzugt jedoch einer Vielzahl von Vertikalrahmen 6 besteht, welche jeweils in einem Abstand parallel zueinander angeordnet sind, der der Breite eines Solarmoduls 4 entspricht. Der in der Schnittdarstellung gezeigte Vertikalrahmen 6 umfasst zwei vertikale Pfosten 8 sowie zwei Ausleger 10, die sich in einer zur Längsrichtung orthogonal verlaufenden Querebene erstrecken, und auf denen die Solarmodule 4 mit ihren in dieser Querebene verlaufenden Kanten aufgenommen sind. Die Ausleger 10 sind in einem Winkel V-förmig zueinander angeordnet und werden durch ein zentrales Verbindungselement 12, z.B. einer Metallplatte, miteinander verbunden, welche mit den Profilen im Bereich ihrer Stoßstellen vernietet, verschraubt oder verschweißt ist, um die Stabilität der gesamten Tragkonstruktion 2 zu erhöhen.

Der Winkel, in welchem die Ausleger 10 gegenüber der Horizontalen ausgerichtet sind, ist erfindungsgemäß ein spitzer, in Aufwärtsrichtung geöffneter Winkel, der zwischen 1 und 30 Grad betragen kann und bevorzugt, wie in der Darstellung gezeigt, 10 Grad beträgt. An dem Verbindungselement 12 ist zudem die Sammelrinne 14 für Regenwasser befestigt, die in Längsrichtung einer jeden Reihe von Solarmodulen 4 verläuft. Die Sammelrinne 14 leitet das von den Solarmodulen 4 aufgefangene und durch deren Neigung in der Mitte der Anordnung 1 zusammenfließende Regenwasser in einen bodenseitigen Behälter 20, der unterhalb der Sammelrinne 14 zwischen zwei Vertikalrahmen 6 angeordnet ist. Aus diesem kann das gesammelte und gespeicherte Regenwasser dann bei Bedarf, etwa zur Bewässerung der Pflanzen, entnommen werden.

Wie weiterhin der Darstellung von Figur 2 entnommen werden kann, umfasst die erfindungsgemäße Anordnung 1 bei einer bevorzugten Ausfuhrungsform der Erfindung eine erste und zweite Tragkonstruktion 2, auf der eine Vielzahl von Solarmodulen 4 entlang von Reihen aufnehmbar sind. Jede der Tragkonstruktionen 2 weist wenigstens zwei parallel in einem der Breite eines Solarmoduls 4 entsprechenden Abstand in Längsrichtung der Reihen von Solarmodulen 4 zueinander angeordnete Vertikalrahmen 6 auf, die jeweils zwei vertikale Pfosten 8 und zwei an diesen aufgenommene und in einem Winkel V-förmig zueinander angeordnete Ausleger 10 umfassen, auf denen die Solarmodule 4 mit ihren Kanten aufgenommen sind. Die Ausleger 10 sind jeweils mittels des zentralen Verbindungselements 12 miteinander verbunden sind, wobei jede Tragkonstruktion 2 eine Sammelrinne 14 zum Sammeln und Ableiten von auf die Solarmodule 4 auftreffendem Regenwasser umfasst, die zentral unterhalb der Solarmodule 4 in Längsrichtung der Reihen von Solarmodulen 4 verläuft. Zwischen den vertikalen Pfosten 8 zweier benachbarter Vertikalrahmen 6 ist jeweils wenigstens ein bodenseitiger Behälter 20 angeordnet ist, in dem das in der Sammelrinne 14 gesammelte Regenwasser aufgenommen und gespeichert werden kann. Die bodenseitigen Behälter 20 können beispielsweise Kunststoffbehälter oder im einfachsten Falle Folienbehälter sein, die sich an den nicht näher bezeichneten seitlichen Abdeckplatten zwischen den Pfosten 8 abstützen, welche entlang einer jeden Seite der beiden dargestellten Reihen von Vertikalrahmen 6 angeordnet sind. Wie der Figur 2 weiterhin im Detail entnommen werden kann, sind die Ausleger 10 der ersten Anordnung 1 und die Ausleger 10 der zweiten, parallel hierzu verlaufenden Anordnung 1 auf den einander zugewandten Seiten der ersten und zweiten Anordnung 1 einander gegenüberliegend auf der gleichen Höhe angeordnet, und jeweils über ein nach unten hin geöffnetes bogenförmiges oder V-förmiges Giebelprofil 11 mechanisch miteinander verbunden.

Hierbei sind die Giebelprofile 11 dazu eingerichtet, weitere Solarmodule 4 zu tragen, die bevorzugt jeweils an zwei benachbarten Giebelprofilen 11 paarweise aufgenommen sind, und gewünschten Falls verschwenkbar (nicht dargestellt) gelagert sind, sodass sich deren Neigungswinkel verändern lässt. Die Außenseite, bzw. Oberseite zweier oder mehrerer bogenförmiger Giebelprofile 11 kann zudem in den Bereichen, in denen keine Solarmodule 4 angeordnet sind, mit Abdeckelementen, z.B. einer schematisch angedeuteten Kunststofffolie 42 in der Weise belegt sein, dass die Solarmodule 4 mit den Abdeckelementen die geschlossene flüssigkeitsdichte Dachfläche 40 bilden, unterhalb von welcher die Pflanzen 100 angebaut werden können. Die Folie 42 liegt bevorzugt unmittelbar auf den Giebelprofilen 11 auf und ist mit diesen verklebt, und/oder thermisch verschweißt, bzw. über Klemmleisten (nicht gezeigt) verklemmt, so dass sich eine geschlossene Folienfläche ergibt, welche bevorzugt mit einer Lotus-Effekt-Beschichtung versehen sein kann, die den Abfluss der Schadstoffe von der Folie 42 in die Sammelrinne 14 begünstigt. Alternativ besteht die Möglichkeit, die gesamte Dachfläche 40 ausschließlich oder zumindest überwiegend mit Kunststofffolienbahnen (42) aus einem für Sonnenlicht transparenten Kunststoffmaterial zu belegen, welches an den Längskanten überlappend verschweißt und auf den Auslegern 10, bzw. Giebelprofilen 11 bevorzugt durch Klemmen oder Verschweißen befestigt ist.

### Liste der Bezugszeichen

- 1: erfindungsgemäße Anordnung
- 2: Tragkonstruktion
- 4: Solarmodul
- 6: Vertikalrahmen
- 8: vertikaler Pfosten
- 10: Ausleger
- 11: Giebelprofil
- 12: zentrales Verbindungselement
- 14: zentrale Sammelrinne für Regenwasser
- 20: bodenseitiger Behälter
- 22: Reinwasserzuleitung
- 24: Füllstandsensor
- 30: Regenwasserablaufleistung
- 30U: U-förmigen Umlenkabschnitt
- 32: elektrisch betätigbares Ventil
- 32 a: Einlass des elektrisch betätigbaren Ventils
- 32 b: erster Auslass des elektrisch betätigbaren Ventils
- 32 c: zweiter Auslass des elektrisch betätigbaren Ventils
- 34: Schmutzwasserablaufleitung
- 35: Stellmotor
- 36: elektronische Steuerungseinrichtung
- 37: Pumpe
- 40: Dachfläche
- 42: Folienbahn
- 50: Regenwasser-Schadstoffsensor
- 100: Pflanzen

## Patentansprüche

1. Anordnung (1) zum Anbau von Pflanzen (100), umfassend eine Tragkonstruktion (2), wenigstens eine auf dieser angeordnete geneigte geschlossene Dachfläche (40), eine unterhalb der Dachfläche (40) angeordnete Sammelrinne (14) zum Sammeln und Ableiten von auf die Dachfläche (40) auftreffendem Regenwasser, sowie einen bodenseitigen Behälter (20), in den das in der Sammelrinne (14) gesammelte Regenwasser einleitbar ist, um dieses im bodenseitigen Behälter (20) zu sammeln und bei Bedarf auf unterhalb der Dachfläche (40) anbaubare Pflanzen (100) auszubringen,
**dadurch gekennzeichnet, dass**
die Sammelrinne (14) mit dem bodenseitigen Behälter (20) über eine Regenwasserablaufleitung 30 und ein in dieser angeordnetes elektrisch betätigbares Ventil (32) wahlweise strömungsmäßig mit dem bodenseitigen Behälter (20) oder einer Schmutzwasserablaufleitung (34) verbindbar ist,
dass die Anordnung (1) weiterhin eine elektronische Steuerungseinrichtung (36) zur Betätigung des Ventils (32) sowie wenigstens einen mit dieser verbundenen Regenwasser-Schadstoffsensor (50) umfasst, der stromaufwärts des Ventils (32) in der Regenwasserablaufleitung (30) oder der Sammelrinne (14) angeordnet ist, wobei die Steuerungseinrichtung (36) dazu eingerichtet ist, das elektrisch betätigbare Ventil (32) aus einer ersten Schaltstellung, in der die Regenwasserablaufleitung (30) ausschließlich mit der Schmutzwasserablaufleitung (34) kommuniziert, um verunreinigtes Regenwasser in die Schmutzwasserablaufleitung (34) einzuleiten, in eine zweite Schaltstellung umzuschalten, in der die Regenwasserablaufleitung (30) strömungsmäßig mit dem bodenseitigen Behälter (20) kommuniziert, wenn die vom Regenwasser-Schadstoffsensor (50) erfasste Schadstoffkonzentration einen vorgegebenen Schadstoff-Schwellenwert unterschreitet.

2. Anordnung nach Anspruch 1,
**dadurch gekennzeichnet, dass**
das elektrisch betätigbare Ventil (32) ein 3/2-Wege oder 3/3 Wegeventil ist, welches einen mit der Regenwasserablaufleitung (30) verbundenen Einlass (32a), einen mit der Schmutzwasserablaufleitung (34) verbundenen ersten Schmutzwasserauslass (32b) sowie einen mit dem bodenseitigen Behälter (20) über eine Reinwasserzuleitung (22) verbundenen zweiten Reinwasserauslass (32c) besitzt, und welches aus der ersten Schaltstellung, in der der Einlass (32a) mit der Schmutzwasserablaufleitung (34) kommuniziert, in die zweite Schaltstellungumschaltbar ist, in der der Einlass (32a) mit der Reinwasserzuleitung (22) kommuniziert.

3. Anordnung nach Anspruch 2,
**dadurch gekennzeichnet, dass**
das elektrisch betätigbare Ventil (32) ein 3/3-Wege Umschaltventil ist, welches durch die elektronische Steuerungseinrichtung (36) in eine dritte Sperrstellung schaltbar ist, in der der mit der Regenwasserablaufleitung (30) verbundene Einlass (32a) verschlossen ist, um Regenwasser zur Durchführung einer Schwallspülung der Regenwasser Ablaufleitung (30) vorübergehend in der Regenwasserablaufleitung (30) zu sammeln.

4. Anordnung nach einer der vorhergehenden Ansprüche,
**dadurch gekennzeichnet, dass**
der wenigstens eine Regenwasser-Schadstoffsensor (50) ein Sensor zum Erfassen von radioaktiver Strahlung und/oder der elektrischen Leitfähigkeit und/oder des PH-Werts von Wasser ist.

5. Anordnung nach Anspruch 4,
**dadurch gekennzeichnet, dass**
der Regenwasser-Schadstoffsensor (50) einen Sensor zur Erfassung von radioaktiver Strahlung ist, der ein Geiger-Müller-Zählrohr umfasst, welches an der Außenseite oder im Inneren der Regenwasserablaufleitung (30) angeordnet ist.

6. Anordnung nach einem der vorhergehenden Ansprüche,
**dadurch gekennzeichnet, dass**
die Regenwasserablaufleitung (30) einen U-förmigen Umlenkabschnitt (30U) für das darin zum Ventil (32) hin abgeleitete Regenwasser besitzt, in welchem der wenigstens eine Regenwasser-Schadstoffsensor (50) angeordnet ist.

7. Anordnung nach einem der Ansprüche 3 bis 6,
**dadurch gekennzeichnet, dass**
die Regenwasserablaufleitung (30) einen zusätzlichen, mit der elektronischen Steuerungseinrichtung (36) verbundenen Füllstandsensor (24) enthält, und dass die elektronische Steuerungseinrichtung (36) dazu eingerichtet ist, das elektrisch betätigbare Ventil (32) aus der dritten Sperrstellung in die erste Schaltstellung zu schalten, in der die Regenwasserablaufleitung (30) ausschließlich mit der Schmutzwasserablaufleitung (34) kommuniziert, wenn der vom Füllstandsensor (24) erfasste Füllstand in der Regenwasserablaufleitung (30) oberhalb von einem vorgegebenen Füllstandschwellenwert liegt.

8. Anordnung nach Anspruch 7,
**gekennzeichne**t, durch
dass die elektronische Steuerungseinrichtung (36) dazu eingerichtet ist, das elektrisch betätigbare Ventil (32) zur Durchführung einer Folge von Schwallspülungen nach einer vorgegebenen Zeitdauer wieder aus der ersten Schaltstellung in die dritte Schaltstellung zu schalten, solange der vom Regenwasser-Schadstoffsensor (50) ermittelte Wert für die Schadstoffkonzentration den vorgegebenen Schadstoff-Schwellenwert überschreitet, und das elektrisch betätigbare Ventil (32) danach aus der dritten Schaltstellung in die zweite Schaltstellung zu schalten, wenn der vom Regenwasser-Schadstoffsensor (50) ermittelte Wert für die Schadstoffkonzentration den vorgegebenen Schadstoff-Schwellenwert unterschreitet.

9. Anordnung nach einem der vorhergehenden Ansprüche,
**gekennzeichnet, durch**
eine erste und zweite Tragkonstruktion (2), auf der eine Vielzahl von Solarmodulen (4) entlang von Reihen aufhehmbar sind, wobei jede der Tragkonstruktionen (2) wenigstens zwei parallel in einem der Breite eines Solarmoduls (4) entsprechenden Abstand in Längsrichtung der Reihen von Solarmodulen (4) zueinander angeordnete Vertikalrahmen (6) umfasst, die jeweils zwei vertikale Pfosten (8) und zwei an diesen aufgenommene und in einem Winkel V-förmig zueinander angeordnete Ausleger (10) umfassen, auf denen die Solarmodule (4) mit ihren Kanten aufnehmbar sind, und wobei die Ausleger (10) jeweils mittels eines zentralen Verbindungselements (12) miteinander verbunden sind,
wobei jede Tragkonstruktion (2) eine Sammelrinne (14) zum Sammeln und Ableiten von auf die Solarmodule (4) auftreffendem Regenwasser umfasst, die zentral unterhalb der Solarmodule (4) in Längsrichtung der Reihen von Solarmodulen (4) verläuft,
wobei zwischen den vertikalen Pfosten (8) zweier benachbarter Vertikalrahmen (6) jeweils ein bodenseitiger Behälter (20) angeordnet ist, in dem das in der Sammelrinne (14) gesammelte Regenwasser aufnehmbar ist,
wobei die Ausleger (10) der ersten Anordnung (1) und die Ausleger (10) der zweiten, parallel hierzu verlaufenden Anordnung (1) auf den einander zugewandten Seiten der ersten und zweiten Anordnung (1) einander gegenüberliegend auf der gleichen Höhe angeordnet, und jeweils über ein nach unten hin geöffnetes bogenförmiges oder V-förmiges Giebelprofil (11) mechanisch miteinander verbunden sind,
wobei die Giebelprofile (11) dazu eingerichtet sind, weitere Solarmodule (4) zu tragen, die bevorzugt jeweils an zwei benachbarten Giebelprofilen (11) paarweise verschwenkbar gelagert sind, und wobei die Außenseite zweier oder mehrerer der bogenförmigen Giebelprofile (11) in den Bereichen, in denen keine Solarmodule (4) angeordnet sind, mit Abdeckelementen, insbesondere einer Folienbahn (42) aus für Sonnenlicht durchlässigem Kunststoffmaterial, belegt ist, derart, dass die Solarmodule mit den Abdeckelementen die geschlossene flüssigkeitsdichte Dachfläche (40) bilden, unterhalb von welcher die Pflanzen (100) anbaubar sind.

10. Verfahren zum Anbau von Pflanzen (100) unter Verwendung einer Anordnung (1) nach einem der vorhergehenden Ansprüche, wobei die Pflanzen (100) unterhalb der geneigten geschlossenen Dachfläche (40) angeordnet sind,
**gekennzeichnet durch** die folgenden Verfahrensschritte:
Schalten des elektrisch betätigbaren Ventils (32) in die erste Schaltstellung und Erfassen der Schadstoffkonzentration in dem in der Regenwasserablaufleitung (30) und/oder der Sammelrinne (14) befindlichen Regenwasser bei einsetzendem Regen, Belassen des Ventils (32) in der ersten Schaltstellung solange die vom Sensor (50) erfasste Schadstoffkonzentration oberhalb eines vorgegebenen, vorzugsweise einstellbaren Schwellenwerts liegt, so dass Regenwasser aus der Regenwasserablaufleitung (30) ausschließlich in die Schmutzwasserablaufleitung (34) eingeleitet wird,
Umschalten des Ventils (32) in die zweite Schaltstellung und Einleiten des Regenwassers aus der Sammelrinne (14) in den bodenseitigen Behälter (20), wenn die vom Regenwasser-Schadstoffsensor (50) erfasste Schadstoffkonzentration unterhalb des vorgegebenen Schwellenwerts liegt, und Verschließen des elektrisch betätigbaren Ventils (32), wenn die vom Regenwasser-Schadstoffsensor erfasste Schadstoffkonzentration den vorgegebenen Schwellenwert übersteigt, und Ausbringen des im bodenseitigen Behälter (20) gesammelten Regenwassers auf die Pflanzen (100).
